# EUROPEAN PATENT SPECIFICATION

(11) **EP 1 504 077 B1**
(45) Date of publication and mention of the grant of the patent: **02.08.2006**
(21) Application number: 03733680.7
(22) Date of filing: 16.04.2003
(51) Int. Cl.: C10J 3/66, C10B 53/00, C10G 1/02

(54) **A METHOD OF METAL PARTS RECOVERY FROM WASTE PRODUCTS OR SEMI-FINISHED PRODUCTS OF ELECTRIC POWER OR ELECTRONIC INDUSTRIES**
VERFAHREN ZUR RÜCKGEWINNUNG VON METALLTEILEN AUS ABFALLPRODUKTEN ODER HALBFERTIGPRODUKTEN AUS DER ELEKTROENERGIE- ODER ELEKTRONIKINDUSTRIE
PROCEDE DE RECUPERATION DES PARTIES METALLIQUES A PARTIR DES DECHETS OU DE PRODUITS SEMI-FINIS DE L'INDUSTRIE ELECTRONIQUE OU ELECTROTECHNIQUE

(30) Priority: 29.04.2002 PL 35366702; 24.03.2003 PL 35930202
(43) Date of publication of application: 09.02.2005
(73) Proprietor: ABB RESEARCH LTD., 8050 Zürich (CH)
(72) Inventor: SEKULA, Robert, PL-30-613 Krakow (PL); LESZCZYNSKI, Slawomir, PL-31-835 Krakow (PL); KACZMAREK, Karol, PL-30-389 Krakow (PL)
(74) Representative: ABB Patent Attorneys
(86) International application number: PCT/PL2003/000038
(87) International publication number: WO 2003/093401

(56) References cited:
- EP-A- 0 545 241
- US-A- 3 632 336
- US-A- 4 649 834
- US-A- 6 084 139

## Description

The subject of the invention is a method of recovery of metal parts from waste products or semi-finished products of electric power or electronic industries, which metal parts are sealed in thermosetting and/or thermoplastic material or in a combination of such materials.

In the electrical industry, in the processes of manufacturing various products such as voltage or current transformers, bushings, embedded poles, electric power cables coated with thermosetting and/or thermoplastic materials in the form of one- or multi-layer lagging jackets, and other sub-units that contain metal parts sealed in casings and their fillings made of thermosetting and/or thermoplastic materials, there are produced large quantities of mixed post-manufacturing waste plastic materials - thermoplastic polymers and thermosetting plastics as well as waste hardened mix and certain quantities of waste in the form of finished products that do not meet quality requirements and therefore may no longer be used. Such waste, as well as finished products of the electric power industry and the electronic industry that have been worn, undergo utilisation aimed at the recovery of certain components of the utilised products in undamaged condition. That is why a properly carried out utilisation of post-manufacturing waste, worn electrical parts and electronic sub-units as well as metallic conductors in thermoplastic and thermosetting lagging jackets is of great economic importance for the manufacturers of such products. The problem of adequate utilisation of waste products in the manufacturing of electronic products, for example during manufacturing of printed circuit boards or other metal-containing elements, is extensively researched and analysed.

In both electrical and electronic waste, the following material flows can be distinguished:
- ferromagnetic materials as internal metal parts forming cores and additional assembly elements,
- non-ferrous metals, of which conductors, windings and additional elements are made,
- electrically insulating fillings and casings based on thermosetting resin mixes (resin, curing agent, filler - most often silica flour),
- conductor lagging jackets made of thermoplastic, thermosetting materials or their multi-layer combinations.

In most of such products, a considerable portion are internal metal parts in the form of cores, cables, windings and smaller metal parts. These elements are made of expensive metals such as copper, aluminium, brass and transformer steel. That is the reason why researchers are looking for an effective method of utilisation and recycling of such waste, which would permit not only processing of thermosetting and/or thermoplastic waste mass, but also a concomitant recovery of metal present in that mass, and especially the recovery of metal elements in the form of undamaged functional internal parts. Such parts could be suitable for reuse in the manufacturing of new products.

There is no any effective method of recovery of damaged metal parts from that type of products. In practice, mechanical methods are employed, based mainly on crushing and fragmentation of material encasing or wrapping the metal parts, in order to separate out those parts from other material. Sometimes the cryogenic method is applied prior to crushing, which includes freezing the material to increase its brittleness to facilitate crushing.

An example of such a solution is presented in patent description USA 5,887,805. The method presented in the description, employing repeated crushing and separation processes, allows for the separation of metal parts from parts that do not contain valuable metals that were originally contained in electronic system boards.

Generally speaking, a disadvantage of mechanical utilisation and recycling methods is the risk of damage to functional metal parts, which causes that the reuse of those parts is restricted to scrap recycling.

That is the reason why mechanical methods are used in combination with thermal and electrochemical methods.

Known methods of thermal utilisation of waste of all types include methods based on burning (incineration), gasification and pyrolysis. Some of these methods, in conjunction with other methods, are used for utilisation and recycling of such specific materials as, for instance, thermosetting mixes. Methods based on thermal disintegration of thermosetting material, and especially those based on pyrolysis, are used to recover functional metal parts sealed in casings and their filling.

From European patent description EPO 0274059 B1 there is known a method of recycling of electric batteries, printed circuit boards and electronic elements. That method is carried out in three stages. The first stage is realised by pyrolysis of unsorted elements in temperature between 450 °C and 650 °C, the second stage, by electrolysis of the post-pyrolysis solid metal residue in the presence of borofluoric acid and its salts, and the third stage consists in the separation and removal of the products of electrolysis collected on the electrodes. In the pyrolysis process the gaseous pyrolysis products are separated out, and then, having passed through a cooler and being washed in the counter-current of 5-10% borofluoric acid they are cleaned up and finally burnt. Then, the metallic post-pyrolysis residue is washed with a water solution of borofluoric acid, filtered prior to the electrolysis process and, when this process is finished, salts that have crystallised in the system are strained out. Metals collected on the cathode are then separated out by metallurgical, electrochemical or chemical methods, and the received electrolyte is preferably returned to the battery manufacturer.

The presented solution requires the application of complicated electrochemical treatment after the pyrolysis process.

From patent description USA 5,836,524 there is known a one-stage process of liquefaction of solid waste from waste products containing printed circuit boards, plastic and rubber waste, worn out cables, windings and polluted grease. The main purpose of this process is the recovery of oil products, but it also allows for the separation of metals from waste and the separation of ferrous and non-ferrous metals. The liquefaction and pyrolysis processes are run in the same vessel, which is an inclined reactor. In the lower section of the reactor waste is liquefied in the presence of hot oil, and in the upper section the pyrolysis process is conducted, while solid parts of the waste material intended for treatment are moved from the lower to the upper section inside the reactor, for example, by means of a screw conveyor. Liquefaction is done at 200° - 400° C, and pyrolysis at 300° - 500° C. Pressure in the reactor is preferably 0-6.8 atm. When the pyrolysis have been completed, polluted inorganic materials and the rest of the material in the form of ferrous and non-ferrous metals are segregated in a separator located outside the reactor.

The essence of the inventive method of recovery of metal parts from waste products or semi-finished products, using the pyrolysis process for thermal disintegration of thermosetting or thermoplastic or a combination of such materials, is that in the pyrolytic reactor there is run the process of pyrolysis of a charge containing waste products or semi-finished products with metal elements sealed in thermosetting or thermoplastic or a combination of such materials , during which process volatile phase and solid post-process residue are produced, the volatile phase being separated into pyrolytic gas and oily condensation liquid, and the solid residue being transported to a burn-out chamber located in the lower part of the pyrolytic reactor or outside it. The process of gasification of the solid post-process residue is run in the burn-out chamber, and the obtained solid gasification residue is then burnt out to remove carbon fraction residue. The final solid residue of the gasification and burning-out processes is removed from the burnt-out chamber and mechanically segregated to separate metal parts from the filler of the thermosetting or the thermoplastic or the combination of such materials.

The process of thermosetting or thermoplastic or a combination of such materials charge pyrolysis is preferably run at a temperature of 680-750° C.

Alternatively, the process of pyrolysis of the thermosetting or thermoplastic or a combination of such materials charge is run at a temperature of 360-450°0 C.

The gasification process of the solid post-process residue is preferably run at a temperature of 450-500° C.

The solid gasification residue is preferably burnt out at a temperature of 850-900° C.

The solid gasification residue is preferably burnt out in the same burn-out chamber, in which the gasification process is run.

Alternatively, the solid gasification residue is burnt out in an arrangement of combined two-stage chambers.

The mechanical segregation is preferably done by means of a sieve shaker.

The burn-out chamber is preferably supplied with natural gas or a propane-butane mixture or fuel oil and/or pyrolytic gas obtained in the same process of recovery of metal parts.

The oily condensate obtained in the process of segregation of the gaseous phase of the pyrolysis process is preferably recycled in the system for metal parts recovery from waste products or semi-finished products of the electric power and electronic industries and is utilised to recover energy.

Preferably, energy recovery from the oily condensate consists in supplying this condensate to the pyrolytic reactor and/or superheater or to the burn-out chamber or a combustion chamber.

The presented solution consists of thermal disintegration of the thermosetting or thermoplastic material or a combination of these two materials in the processes of pyrolysis, gasification or burning out of the said waste and the solid post-process residue. The products of so compiled utilisation process are pyrolytic gas, oily condensate and solid post-process residue and metal parts.

The main advantage of the inventive method is the possibility of recovery of expensive functional metal parts whole, without mechanical damage preventing their reuse.

The introduction of a superheater into the system and recirculation of the oily condensate allows for an increase in the total thermal efficiency of the system and ensures an effective running of the pyrolysis process in temperatures below 600 °C.

An additional advantage of the inventive method with respect to thermosetting materials is the possibility of recovery of filler, which sometimes constitutes more than 60% of the thermosetting mix.

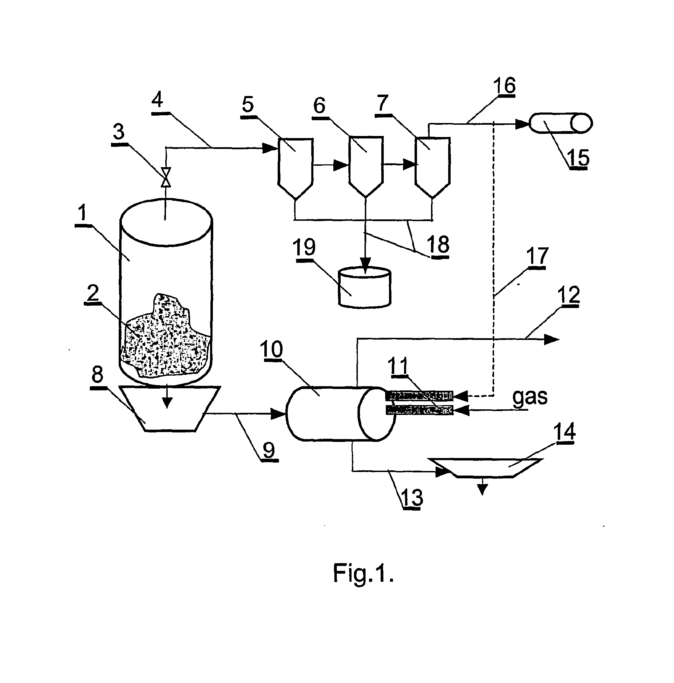

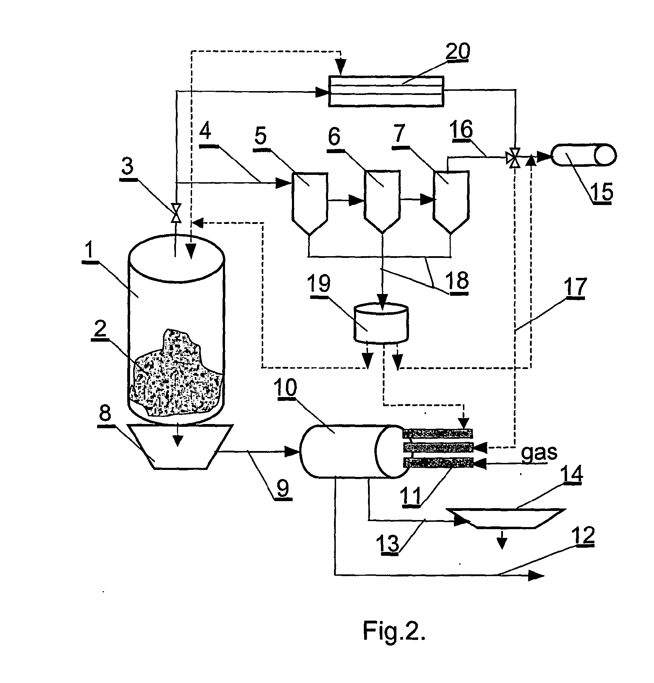

The inventive method is explicated based on its embodiment and illustrated by a drawing where fig. 1 shows a simplified diagram of the installation for running the process, especially for the recovery of metal parts from waste products made of thermosetting materials, and fig. 2 shows a developed diagram of the installation for the recovery of metal parts from waste products made of thermoplastic materials or their combinations with thermosetting materials.

The installation for running the inventive process of recovery of metal parts from waste products or semi-finished products, which are placed in elements of casings, made by sealing metal parts in thermosetting mixes or metal conductors in thermosetting or thermoplastic lagging jackets contains a classic pyrolytic reactor 1 operating in vertical or horizontal arrangement, which is not shown in the drawing, inside which charge 2, being the waste material intended for processing, is placed. The charge is fed into the reactor chamber by means of known equipment, not shown in the drawing. The upper part of the reactor 1 is connected via a valve 3 by suitable conduits 4, intended for conveying pyrolytic gas, with a gas purification system containing a cooler 5, a condenser 6 and a cyclone 7, and optionally, as shown in fig. 2 a superheater 20. The lower part of the reactor 1 is connected with a burn-out chamber 10 by means of a suitable chute device 8, which can also serve as, for example, a sealing closure for the reactor 1 chamber at the bottom and a dosing feeder in the form of a cell feeder, and by means of a feeding belt or screw 9. This chamber may be a part of the pyrolytic reactor, which is not shown in the drawing. In such case the chute device is installed directly in the pyrolytic reactor 1. The burn-out chamber 10 can be made as a system of two-stage interconnected chambers, which is not shown in the drawing. Two processes take place in this chamber, namely the process of gasification of the solid post-process residue produced in the pyrolysis process and the process of burning out the solid post-process residue of the gasification process. The burn-out chamber 10 is supplied with natural gas or a propane-butane mixture or fuel oil, through a burner system 11, and it is furnished with conduits 12 evacuating post-process gases produced during oxidation of the carbon fraction that has not reacted in the pyrolytic reactor 1. Supplying the burn-out chamber 10 with propane-butane mixture or fuel oil is especially advantageous when a portable or mobile installation is used to run the process. Such an installation can be placed on the platform of any motor vehicle. The burn-out chamber 10 is connected, through a belt conveyor 13 or a feeding screw used to transport the final solid residue of the gasification and burn-out processes, with a separating device in the form of a shaker 14, where, on the sieves of that shaker, filler and metal internal parts are separated. After purification, pyrolytic gases are subjected to the combustion process in a combustion chamber 15 located outside the reactor and connected with it by conduits for pyrolytic gas transport 16. These gases can be conveyed through conduits 17 to the burn-out chamber 10, where their combustion energy can be used as an additional source of energy. Oily condensate separated in the gas purification system 5, 6, 7 is supplied through evacuation conduits 18 to a condensate tank 19 and from there to the pyrolytic reactor 1 and/or a superheater 20, and also to the combustion chamber 15 or the burn-out chamber 10.

In an experiment, charge 2 consisted of damaged current transformers whose casings were made from a material based on a thermosetting mix of araldyte resin CY 225 made by the Swiss company Vantico. This charge, whose mass was 4390 g, was subjected to the pyrolysis process in the pyrolytic reactor 1, at a temperature of 750 °C for a time of 3 hours. As a result of such a process 3960 g of solid post-process residue was obtained, which was then subjected to the gasification process in the burn-out chamber at a temperature of 475 °C for a period of 2 hours, and then, in the same chamber, it was subjected to the burn-out process at a temperature of 875 °C and for a period of 0.5 hour. As a result of the gasification and burning 3930 g of solid residue was obtained, which was then subjected to vibrations on a sieve of 3 mm mesh for a time of 3 minutes. In this way 2740 g of a finished metal element of a current transformer suitable for reuse as a magnetic core was recovered, 590 g of copper winding was gained and 600 g of filler powder that had been a component of thermosetting mix was recovered.

Instead of current transformers used in the presented experiment other waste products of the power electric or electronic industries can be used, and in particular waste or worn out power cables in lagging jackets made of thermosetting or thermoplastic materials or their combinations.

### "A method of recovery of metal parts from waste products or semi-finished products of the electric power and electronic industries"

### Key to the drawing

1. pyrolytic reactor
2. charge
3. valve
4. conduit for pyrolytic gas transport
5. cooler
6. condenser
7. cyclone
8. chute device
9. feeding belt or screw
10. burn-out chamber
11. natural gas burner system
12. conduits for evacuation of process gases
13. belt conveyor
14. shaker
15. pyrolytic gas combustion chamber
16. conduits supplying pyrolytic gas to the combustion chamber
17. conduits supplying pyrolytic gas to the burn-out chamber
18. conduits evacuating oily condensate
19. condensate tank.
20. superheater

## Claims

1. A method of recovery of metal parts from waste products or semi-finished products of electric power and electronic industries, using the pyrolysis process for thermal disintegration of thermosetting or thermoplastic or a combination of such materials, **characterised in that** the process of pyrolysis of a charge containing waste products or semi-finished products with metal elements sealed in thermosetting or thermoplastic or the combination of such materials is run in a pyrolytic reactor, in which process a volatile phase and a solid post-process residue are produced, the volatile phase being divided into pyrolytic gas and oily condensate, and the solid post-process residue being transported by any means to a burn-out chamber located in the lower part of the pyrolytic reactor or outside it, after which the process of gasification of the solid post-process residue is run in the burn-out chamber, and the obtained solid gasification residue is then burnt out in order to remove carbon fraction residue from it, whereupon the final solid residue of the gasification and burn-out processes is removed from the burn-out chamber and segregated mechanically to separate metal parts from the filler of the thermosetting or the thermoplastic or the combination of such materials.

2. A method according to claim 1, **characterised in that** the charge pyrolysis process is run at a temperature of 680-750 °C.

3. A method according to claim 1, **characterised in that** the charge pyrolysis process is run at a temperature of 360-450° C.

4. A method according to any previous claims **characterised in that** the process of gasification of the solid post-process residue is run at a temperature of 450-500 °C.

5. A method according to any previous claims, **characterised in that** the solid gasification residue is burnt out at a temperature of 850-900 °C.

6. A method according to any previous claims **characterised in that** the solid gasification residue is burnt out in the same burn-out chamber in which the gasification process is run.

7. A method according to any previous claims **characterised in that** the solid gasification residue is burnt out in a system of interconnected two-stage chambers.

8. A method according to any previous claims **characterised in that** the mechanical segregation is made by means of a vibrating sieve.

9. A method according to any previous claims **characterised in that** the burn-out chamber is supplied with natural gas or fuel oil and/or pyrolytic gas obtained in the same process of metal parts recovery.

10. A method according to any previous claims , **characterised in that** oily condensate obtained in the process of dividing the gaseous phase of the pyrolysis process is recycled in the system for the recovery of metal parts from waste products or semi-finished products of electric power and electronic industries and is utilised to recover energy.

11. A method according to claim 10, **characterised in that** the energy-recovering utilisation of the oily condensate consists of feeding this condensate from a tank (19) to a pyrolytic reactor (1) and/or superheater (20).

12. A method according to claim 10, **characterised in that** the energy-recovering utilisation of the oily condensate consists in feeding this condensate from the tank (19) to a burn-out chamber (10).

13. A method according to claim 10, **characterised in that** the energy-recovering utilisation of the oily condensate consists in feeding this condensate from the tank (19) to a combustion chamber (15).

## Patentansprüche

1. Verfahren zur Rückgewinnung von Metallteilen aus Abfallprodukten oder Halbfertigprodukten aus der Elektroenergie oder Elektronikindustrie, mit Anwendung einer Pyrolyse zur thermischen Zersetzung eines hitzehärtbaren oder thermoplastischen Stoffes oder deren Kombination, bezeichnend **dadurch**, dass in einem pyrolytischen Reaktor die thermische Zersetzung eines Einsatzes, der Abfall- oder Zwischenprodukte mit den im hitzehärtbaren oder thermoplastischen Stoff eingeschmelzten Metallteilen enthält, durchgeführt wird, während welcher die gasförmige Phase und der fester Prozessrückstand entsteht, wobei die gasförmige Phase auf pyrolytisches Gas und öliges Kondensat zerteilt wird und der feste Prozessrückstand wird auf eine beliebigen Weise in eine Ausbrennkammer, die sich im unteren Teil des Reaktors oder außerhalb dessen befindet, hingebracht, und danach wird in der Ausbrennkammer eine Vergasung des festen Prozessrückstandes durchgeführt, und der feste Rückstand wird nach der Vergasung dann noch ausgebrannt, um die Reste der Kohlenfraktion zu beseitigen, und der Endrückstand wird nach der Vergasung und dem Ausbrennen aus der Ausbrennkammer herausgebracht und einer mechanischen Separation untergezogen, um die metallischen Teile von dem Füllstoff des hitzehärtbaren oder thermoplastischen Stoffes oder deren Kombination abzutrennen.

2. Verfahren nach Anspruch 1 bezeichnend **dadurch**, dass die thermische Zersetzung des Einsatzes bei einer Temperatur 680-750°C geführt wird.

3. Verfahren nach Anspruch 1 bezeichnend **dadurch**, dass die thermische Zersetzung des Einsatzes bei einer Temperatur 360-450°C geführt wird.

4. Verfahren nach einem beliebigen der o.a. Ansprüche bezeichnend **dadurch**, dass die Vergasung des festen Prozessrückstandes bei einer Temperatur 450-500°C geführt wird.

5. Verfahren nach einem beliebigen der o.a. Ansprüche bezeichnend **dadurch**, dass das Ausbrennen des festen Rückstandes nach der Vergasung bei einer Temperatur 850-900°C geführt wird.

6. Verfahren nach einem beliebigen der o.a. Ansprüche bezeichnend **dadurch**, dass das Ausbrennen des festen Rückstandes nach der Vergasung, in der selben Ausbrennkammer geführt wird, in der die Vergasung geführt wird.

7. Verfahren nach einem beliebigen der o.a. Ansprüche, bezeichnend **dadurch**, dass das Ausbrennen des festen Rückstandes nach der Vergasung in einem System von verbundenen zweistufigen Kammern geführt wird.

8. Verfahren nach einem beliebigen der o.a. Ansprüche, bezeichnend **dadurch**, dass die mechanische Separation mittels eines Rüttelsiebes durchgeführt wird.

9. Verfahren nach einem beliebigen der o.a. Ansprüche bezeichnend **dadurch**, dass die Ausbrennkammer mit Erdgas oder Heizöl und/oder mit dem bei der Rückgewinnung der Metallteile gewonnenen pyrolytischen Gas versorgt wird.

10. Verfahren nach einem beliebigen der o.a. Ansprüche bezeichnend **dadurch**, dass das bei der Zerteilung der gasförmigen Phase des Zersetzungsprozesses gewonnene ölige Kondensat in das System zur Rückgewinnung von Metallteilen aus Abfall- oder Zwischenprodukten der elektroenergetischen und der elektronischen Industrie rezirkuliert und energetisch verwertet wird.

11. Verfahren nach Anspruch 10 bezeichnend **dadurch**, dass die energetische Verwertung des öligen Kondensats darin besteht, dass dieses Kondensat vom Behälter (19) zum pyrolytischen Reaktor (1) und/oder zum Überhitzer (20) zugeführt wird.

12. Verfahren nach Anspruch 10 bezeichnend **dadurch**, dass die energetische Verwertung des öligen Kondensats darin besteht, dass dieses Kondensat vom Behälter (19) zu der Ausbrennungskammer (10) zugeführt wird.

13. Verfahren nach Anspruch 10 bezeichnend **dadurch**, dass die energetische Verwertung des öligen Kondensats darin besteht, dass dieses Kondensat vom Behälter (19) zu der Brennkammer (15) zugeführt wird.

## Revendications

1. Procède de récupération des parties métalliques a partir des déchets ou des produits semi-finis de l'industrie électronique ou électrotechnique, qui utilise la pyrolyse pour la décomposition thermique des matériaux thermo-durcissant, thermo-plastique ou mélangés, **caractérisé en ce que**, dans le réacteur à pyrolyse, on accomplit la pyrolyse d'un mélange contenant des produits au rebut ou des produits semi-finis avec des éléments métalliques noyés dans des matériaux thermo-durcissant, thermo-plastique ou mélangés ; pendant ce process est produit une phase volatile et un résidu solide post-réaction, ce qui fait que la phase volatile se sépare en gaz pyrolytique et condensat oléagineux, tandis que le résidu solide post-réaction est acheminé par un moyen quelconque à la chambre de calcination, située dans la partie inférieure du réacteur pyrolytique ou à l'extérieur de celui-ci ; par la suite un process de gazéification du résidu solide post-réaction est mené dans la chambre de calcination, puis la fraction solide résiduelle de la gazéification est calcinée dans le but d'en retirer la partie carbonée ; puis la fraction résiduelle ultime, après les process de gazéification et de calcination, est retirée de la chambre de calcination et est soumise à une séparation mécanique pour séparer les parties métalliques des matériaux de liaison thermo-durcissant, thermo-plastique ou mélangés.

2. Procède selon la revendication 1, **caractérisé par le fait que** le process de pyrolyse est conduit à la température de 680-750° C.

3. Procède selon la revendication 1, **caractérisé par le fait que** le process de pyrolyse est conduit à la température de 360-450° C.

4. Procède selon à l'une des déclarations précédentes quelle qu'elle soit, **caractérisé par le fait que** le process de gazéification est conduit la température de 450-500° C.

5. Procède selon à l'une des déclarations précédentes quelle qu'elle soit, **caractérisé par le fait que** le résidu solide est calciné à la température de 850-900° C.

6. Procède selon à l'une des déclarations précédentes quelle qu'elle soit, **caractérisé par le fait que** le résidu solide est calciné dans la même chambre de calcination que celle où s'effectue le process de gazéification.

7. Procède selon à l'une des déclarations précédentes quelle qu'elle soit, **caractérisé par le fait que** le résidu solide est calciné dans un système à doubles chambres accolées.

8. Procède selon l'une des déclarations précédentes quelle qu'elle soit, **caractérisé par le fait que** la séparation mécanique s'effectue à l'aide d'un tamis vibrant.

9. Procède selon à l'une des déclarations précédentes quelle qu'elle soit, **caractérisé par le fait que** la chambre de calcination est alimentée par du gaz naturel, ou du fuel, et/ou du gaz pyrolytique obtenu par ce process de recyclage des parties métalliques lui-même.

10. Procède selon à l'une des déclarations précédentes quelle qu'elle soit, **caractérisé par le fait que** le condensat oléagineux obtenu lors du process de séparation de la phase gazeuse au cours du process de pyrolyse est en recirculation dans le dispositif de recyclage des parties métalliques des produits au rebut ou des produits semi-finis de l'industrie électro énergétique et électronique, ou qu'il est recyclé à des fins énergétiques.

11. Procède selon la revendication 10, **caractérisé par le fait que** le recyclage du condensat oléagineux est basé sur l'alimentation de ce condensat à partir d'un réservoir (19) vers le réacteur pyrolytique(1) et/ou le système de préchauffage (20).

12. Procède selon la revendication 10, **caractérisé par le fait que** le recyclage du condensat oléagineux est basé sur l'alimentation de ce condensat à partir d'un réservoir (19) vers la chambre de calcination (10).

13. Procède selon la revendication 10, **caractérisé par le fait que** le recyclage du condensat oléagineux est basé sur l'alimentation de ce condensat à partir d'un réservoir (19) vers la chambre de combustion (15).
